# EUROPEAN PATENT SPECIFICATION

(11) **EP 2 380 070 B1**
(45) Date of publication and mention of the grant of the patent: **25.12.2013**
(21) Application number: 10705534.5
(22) Date of filing: 19.01.2010
(51) Int. Cl.: G05F 1/67

(54) **POWER CONTROL OF SERIALLY CONNECTED CELLS**
LEISTUNGSSTEUERUNG SERIELL VERBUNDENER ZELLEN
COMMANDE DE PUISSANCE DE CELLULES RACCORDÉES EN SÉRIE

(30) Priority: 19.01.2009 EP 09150882
(43) Date of publication of application: 26.10.2011
(73) Proprietor: FH Joanneum GmbH, 8605 Kapfenberg (AT)
(72) Inventor: Berger, Hubert, 8642 St. Lorenzen im Mürztal (AT)
(74) Representative: Dilg, Andreas
(86) International application number: PCT/EP2010/000291
(87) International publication number: WO 2010/081746

(56) References cited:
- WO-A2-2007/124059
- US-A- 4 175 249
- US-A- 5 001 415
- FEMIA N ET AL: "Distributed Maximum Power Point Tracking of Photovoltaic Arrays: Novel Approach and System Analysis", IEEE TRANSACTIONS ON INDUSTRIAL ELECTRONICS, IEEE SERVICE CENTER, PISCATAWAY, NJ, USA, vol. 55, no. 7, 1 July 2008 (2008-07-01), pages 2610-2621, XP011226624, ISSN: 0278-0046, DOI: DOI:10.1109/TIE.2008.924035

## Description

The invention relates to a cell arrangement.

Moreover, the invention relates to a method of operating a cell arrangement.

Beyond this, the invention relates to a program element.

The invention further relates to a computer-readable medium.

US 7,466,104 discloses a system and method for cell balancing with smart low-voltage control circuit. The cell balancing system comprises a plurality, of battery cells, an external bypass path for each cell, an internal bypass path for each cell, an input terminal receiving an enable signal for each cell, an input terminal receiving a selection signal, and a cell balancing unit for generating a configuration signal to conduct the external bypass path or internal bypass path. The enable signal is configured to enable a bypass current of each cell, and the selection signal is configured to select the external bypass path or internal bypass path. The cell balancing unit is employed to receive signals from input terminals, and generate a configuration signal to control the conductance of external bypass paths or internal bypass paths.

JP 2005/253273 discloses a DC power supply system that can prevent a trouble even if an arbitrary cell is put into abnormal states including a short-circuit, disconnection, overcharge, and overdischarge.

JP 2007/335337 discloses a power supply device using battery packs capable of detecting cell unbalance at an early stage to secure safety and having excellent stability. In this device, the plurality of battery packs constituted by connecting a plurality of rechargeable unit cells in series are connected in series and used to supply electric power to equipment. Each of the battery packs is provided with a charge and discharge control circuit. A protection circuit monitoring cell voltage between the respective cell units and detecting the charge and discharge state is provided. A control part is provided to which information indicating the cell voltage and charge and discharge state from the protection circuit and lot information at the time of manufacturing of the each unit cell are input beforehand and which controls charge and discharge via the charge and discharge control circuit. A system control part connected to the respective control parts provided with respect to each of the battery packs and controlling the entire device is provided. The system control part compares lot information input from the respective control parts, and sends a signal to prohibit charge and discharge to the respective control parts to prevent charge and discharge, when the information is nonidentical.

JP 2003/282155 discloses a system for accurately detecting an abnormality in cells constituting a battery pack.

US 2005/242667 discloses a multi-series battery control system which comprises a plurality of unit battery cell of which unit consists of multiple battery cells connected in series, a plurality of control IC comprising a control circuit for controlling the unit battery cell, and a main controller that sends and receives signal to/from the control ICs via an insulation. Means for sending an abnormality signal are provided, which represents the existence or the absence of abnormality of the control ICs or the battery cells, to the main controller from the control ICs, responding to the first signal outputted from the main controller via the insulation. Means for searching contents of the abnormality in the control ICs or the battery cells and sending the abnormality contents signal based on the search, to the main controller from the control ICs, responding to the second signal outputted from the main controller via the insulation, are provided.

EP 0,907,238 discloses a multiple pulse-width modulation power conversion device for variable-speed drive of a three-phase AC motor which comprises three units, each unit including n (n >/= 2) batteries, each made up of a DC power supply or at least one battery cell, and n power converters for converting the DC power of each of these batteries to single-phase AC power. Single-phase AC terminals within each unit are connected in series, and of the single-phase AC terminals within each unit, one of the single-phase AC terminals that is not connected to the single-phase AC terminal of another power converter is connected to a star connection, and the other is connected to a respective one of three input terminals of a three-phase AC motor. The power conversion device further comprises control circuits for controlling the power converters such that the AC outputs applied to the single-phase AC terminals of the n power converters within each unit are of the same phase, and further, for effecting multiple pulse-width modulation such that the AC outputs from the three units are separated by an electrical angle of 120°.

WO 2007/124059 A2 discloses an apparatus and methodology for generating operating power for various desired applications using solar energy. A solar array is formed using a small number of solar cells connected in series to form a string of solar cells and then connecting multiple strings in parallel. Unlike conventional solar arrays, no bypass diodes are incorporated into the array. A power converter is coupled to the array to boost output voltage to a level sufficient to operate the desired application. The power converter may be operated independently or based on output levels of the array, the material from which the solar cells of the array are constructed and the operating temperature of the array or combinations thereof.

FEMIA et al.: "Distributed Maximum Power Point Tracking of Photovoltaic Arrays: Novel Approach and System Analysis" discloses a photovoltaic array system. The system comprises several photovoltaic arrays, each being connected to a DC/DC converter. The outputs of the DC/DC converters are coupled to a grid via a DC/AC converter.

US 5 001 415 A discloses an electrical power transfer apparatus for controlling the supply of electrical power from an array of photovoltaic cells to an electrical load by means of a switching power converter. The switching power converter is controlled by a regulator to maintain the output voltage from the photovoltaic array at a fixed fraction of the open circuit voltage of the photovoltaic array. The open circuit voltage of the photovoltaic array is sensed by inhibiting the operation of the switching power converter for short sampling periods at regular intervals, and allowing a capacitor to charge to the voltage of the open-circuited photovoltaic array during the sampling periods.

US 4 175 249 A discloses a self-reconfiguring solar cell array wherein some of the cells are switched so that they can be either in series or in shunt within the array. Automatic control is used to determine the conditions for maximum power operation and to switch the array into the appropriate configuration necessary to transfer maximum power to the load.

A solar cell or photovoltaic cell is a device that converts solar energy into electricity by the photovoltaic effect. Photovoltaics may be denoted as the field of technology related to the application of solar cells as solar energy. The term solar cell may be used for devices intended specifically to capture energy from sunlight, whereas the term photovoltaic cell may be used when the source is unspecified.

Today's solar installations are disproportionately impacted by shading conditions, which significantly limits the design, location, and energy output of typical residential solar installations. Hence, a shortcoming of conventional photovoltaic cell arrays is that shading of a photovoltaic cell of such an array may deteriorate the performance of the entire array

For maximizing the energy of solar panels, the company National Semiconductor has disclosed the so-called SolarMagic Technology to increase the effectiveness of solar panels under variable light conditions. This technology recoups up to 50 percent of the lost energy, thereby improving the economics in shaded and other real-world conditions. This technology intends to maximize the energy output of each solar panel, compensating for much of the energy lost due to shadows from tree branches or utility lines, dust and debris, and panel-to-panel mismatch.

It is an object of the invention to provide a cell arrangement providing a reliable performance even under variable external and/or internal conditions.

In order to achieve the object defined above, a cell arrangement, a method of manufacturing a cell arrangement, a program element, and a computer-readable medium according to the independent claims are provided.

According to an exemplary embodiment of the invention, a cell arrangement according to the appended claim 1 is provided comprising a plurality of serially coupled cells (such as photovoltaic cells, solar cells, capacitor or battery cells) each being adapted to provide electric energy and a control entity (for instance an electronic control circuit or a software-based control block) interconnected between the plurality of cells and being adapted to operate each of the plurality of cells (for instance to operate individual photovoltaic cells or groups of photovoltaic cells) as an electric power source in accordance with present operation conditions (which may be changed internally for instance due to aging effects and/or may be changed externally for instance due to shadowing effects) so that each of the plurality of cells provides its appropriate electric output power (for instance may be operated at a maximum power point, MPP) achievable under the present operation conditions (particularly, the cells may be controlled individually or groupwise to provide a variable maximum electric output power value which can vary when the present operation conditions vary due to cell-intrinsic or external changes) and so as to be in accordance with a predefined cell operation criteria.

According to another exemplary embodiment of the invention, a method of operating a cell arrangement according to the appended claim 14 is provided, the method comprising serially coupling a plurality of cells each being adapted to provide electric energy, interconnecting a control entity between the plurality of cells, and operating, by the control entity, each of the plurality of cells as an electric power source in accordance with present operation conditions so that each of the plurality of cells provides a maximum electric output power achievable under the present operation conditions and so as to be in accordance with a predefined cell operation criteria.

According to still another exemplary embodiment of the invention, a program element according to the appended claim 15 (for instance a software routine, in source code or in executable code), which, when being executed by a processor (such as a microprocessor or a CPU, or in a hardcore (VHDL, Very High Speed Integrated Circuit Hardware Description Language) configuration), is adapted to control or carry out a method having the above mentioned features.

Driving a cell arrangement which may be performed according to embodiments of the invention can be realized by a computer program, that is by software, or by using one or more special electronic optimization circuits, that is in hardware, or in hybrid form, that is by means of software components and hardware components.

In the context of this application, the term "cell" may particularly denote any basic unit in an array of multiple power sources. Such a cell may be a photovoltaic cell of a photovoltaic module, a battery of a battery block, a capacitor of a capacitor bank, etc.

The term "power source" may particularly denote an entity which is capable of providing a certain amount of power. In other words, the term "power source" may denote an entity which provides a constant product of voltage and current, whereas individual values of voltage and/or current may be design parameters changeable to keep voltage multiplied with current at a constant value. In embodiments of the invention, a current source or a voltage source may be operated in a tricky way in order to function as an entity which contributes a maximum (in relation to other cells, or as an individual cell) amount of power which is providable under present conditions (for instance irradiance or other illumination conditions) in the case of a solar cell. A state of charge may be a parameter to be controlled in the case of battery cells.

The term "operation condition" may particularly denote a cell internal or cell external boundary condition under which a cell is operated for generating electric power. Examples for cell internal operation conditions are chemical and/or physical modifications in the cell resulting from aging effects or the like and having an impact on the power supply performance of the cell. Examples for a cell external operation condition are shadowing effects of solar cells, a temperature increase of a cell having an impact of the energy conversion efficiency, etc.

The term "predefined cell operation criteria" may particularly denote a cell-type dependent technical boundary condition which may be defined as a criteria which has to be fulfilled during operation of the device. Such a criteria may describe a target behaviour of a specific kind of cell type implemented in the arrangement. For instance in an embodiment in which the cells are solar cells, the predefined cell operation criteria may be the target to obtain a maximum power from each individual solar cell which can be considered as a current source, i.e. to operate each individual solar cell in a maximum power point. For instance in an embodiment in which the cells are battery cells (which may be considered as voltage sources), the predefined cell operation criteria may be the target to obtain a working load of individual battery cells which deviates as little as possible from one another, i.e. to reduce or minimize charge differences among different cells. Thus, a battery-related cell operation criteria may be a charge balancing for instance with a certain percentage of maximum deviation as a predefined threshold value, particularly a completely balanced charge of all batteries. With battery cells or capacitor cells, the criteria may be to prevent that different battery cells or capacitor cells differ or differ too much regarding their charge states. A capacitor as a cell may be considered equally as a battery, namely as a voltage source in which charge balancing should be achieved as a cell operation criteria.

The term "DC/DC converter" may particularly denote a circuit which converts a source of direct current (DC) from one voltage level to another. A DC/DC converter is a class of power converters. Photovoltaic cell arrangements may contain several sub-circuits, each with its own voltage level requirement different than that supplied by an external supply. A DC/DC Converter may hence be an electronic circuit which takes a DC input voltage and converts it to a different, desired DC output voltage.

The term "step-up converter" may particularly denote a boost converter which may be considered as a switching converter which produces an output voltage greater than the source.

According to an exemplary embodiment of the invention, an array of cells may be controlled (particularly on a cell level) to operate at a working point at which a total power output of the array is at a desired state (particularly is as large as possible), i.e. at a value which can be achieved ideally under consideration of - firstly - the present operation conditions (such as a present irradiance in case of solar cells) and simultaneously under consideration of - secondly - a cell-type dependent operation condition (such as the goal to achieve a maximum power output for each individual cell, i.e. on cell level, in case of solar cells).

According to an exemplary embodiment of the invention, an array of cells such as photovoltaic cells is provided in which each individual cell contributes to an overall power output. In contrast to conventional approaches in which the reduction of the power provided by a single cell deteriorates the entire cell arrangement, an exemplary embodiment of the invention provides a control entity which operates the cells of the arrangement in such a manner that the cells are always operated at a maximum power point, i.e. are operated so as to provide a maximum amount of power which is possible under the present operation conditions of the cell arrangement. Hence, even when the internal or external environmental conditions under which the cell arrangement provides power change, the system is still operated in an optimum operation mode and may be regulated onto a maximum power point.

For instance, when a number of solar cells with individual voltage contributions are serially connected, exemplary embodiments of the invention may react on an event that one cell provides a larger (smaller) voltage with the consequence that the remaining cells compensate this temporary local increase of the voltage by smaller (larger) voltage contributions. For instance, the serially connected cells may divide up a total voltage in a way that the individual voltages match to the respective power contributions of the individual cells under the present operation conditions.

Exemplary embodiments may also allow to perform an impedance conversion. Such a flexible change of the impedance of the individual constituents of the circuit may allow to individually increase or decrease voltage contributions of individual cells, i.e. on a cell scale and not only on a module scale. For an array of solar cells which can be considered as a number of current sources, this current source behaviour may be converted into a power source behaviour so that each of the individual power sources provides an output power (on a cell basis) independent from an external load, that is a maximum power which is achievable under the present lightning conditions.

According to an exemplary embodiment of the invention, an electronic circuit having a DC/DC converter is provided for regulating the output current of electric energy sources such as solar cells connected in series. This regulation may be performed in such a manner that the power taken from the energy source is always at a maximum value (maximum power point) even under varying operational conditions or external loads. Such a circuit can be regulated to obtain a maximum power output of the cell. From an external point of view, the system behaves as a power source at which the output power is constant independent from an external load so that in case of a serial connection of the sources, the output voltages are adjusted automatically to be proportional to the ratio of the individual maximum power point power values of the cells. By taking this measure, differences regarding the maximum-power-point power values (mismatch), which may occur conventionally e.g. by partial shadowing, can be equilibrated or compensated by an adjustment of the output voltages. Hence, the serially connected energy sources can be operated in a proper manner also in a scenario in which they provide different power contributions, so that the system can be maintained always in an optimum operation point.

Next, further exemplary embodiments of the cell arrangement will be explained. However, these embodiments also apply to the method, to the computer-readable medium and to the program element.

The control entity may be adapted to control an output current of the plurality of cells so that the corresponding output power of the respective cells is maintained at a maximum level (MPP) in relation to other cells regardless of changes of an operational condition of at least a part of the cell arrangement. For this purpose, an impedance adjustment may be performed.

The control entity may comprise at least one DC/DC converter each of which being assigned to one of or to a group of the plurality of cells. For example, in one embodiment, each cell may have its individual DC/DC converter. In another embodiment, multiple cells share one common DC/DC converter. The latter embodiment provides for a reduced number of converters , whereas the former embodiment allows for a very accurate control of each individual cell separately.

The control entity may comprise at least one step-up converter each of which being assigned to one of or to a group of the plurality of cells. A step-up converter or boost converter may be denoted as a power converter with an output DC voltage larger than its input DC voltage.

The control entity may comprise a plurality of DC/DC converters, wherein each of the plurality of DC/DC converters comprises an input terminal and an output terminal, wherein one of the pluralities of cells is connected between the input terminal and the output terminal of an assigned one of the plurality of DC/DC converters. Such an architecture of providing individual DC/DC converters between an output of an upstream cell and an input of a downstream cell may allow for a very efficient coupling of the individual cells.

At least one DC/DC converter may be adapted so that an assigned voltage limit is variable in dependence of an output current. Hence, an impedance matching may be performed so that voltage limits may be adjusted in dependence of the present output current, which may be changed in the example of a solar cell by changing lightning conditions.

The at least one DC/DC converter may be adapted as a multiphase DC/DC converter. Such a multiphase DC/DC converter may operate at a number of phases larger than one. Particularly, a number of phases of the multiphase DC/DC converter may correspond to a ratio between an output voltage and an input voltage of an assigned one of the plurality of cells. In such an embodiment, an accurate control of the individual cells is possible.

The at least one DC/DC converter may be adapted for monitoring an output voltage and for limiting the output voltage upon detecting that a value of the output voltage falls below a predefined threshold value. For example, in a scenario in which a voltage is much smaller than a voltage which could be expected in view of the present environmental conditions, a short circuit may be present. If this is detected, the control entity may be set on a very small output voltage or can be switched off entirely.

In an embodiment, at least one bypass diode may be arranged to bridge at least a part of the plurality of cells. Such a bypass diode may be connected antiparallel to a certain number of cells and may provide a current path to prevent damage of cells in a scenario in which a voltage of a for instance shaded cell becomes reverse-biased and can damage a corresponding cell.

In an embodiment, the control entity may be arranged at a cell level of a substrate on which the plurality of cells is arranged. Thus, the control may not only be performed on a module or array level, but also on an individual cell level. This may allow to refine the accuracy of the control or regulation.

In an embodiment, the plurality of cells is arranged at a front surface of a substrate and the control entity may be arranged at a rear or back surface of the substrate opposing the front surface. Such a back contacting technology allows for an efficient use of a surface of a substrate such as a silicon substrate and may allow to add electronic circuits on the rear side of the module, wherein a front side of the module may be covered with the cells. For instance, it is possible to add one or more bypass diodes at cell level or even miniaturize power electronic circuits.

The cell arrangement may be adapted as a power source with voltage limitation. Hence, it may be ensured with the cell arrangement according to an exemplary embodiment that the voltage does not exceed a certain threshold value. This allows to provide a self-adaptive system without the necessity of further detailed information regarding solar cells.

Preferably, the plurality of cells is a plurality of photovoltaic cells which are operable as current sources. Such photovoltaic cells may be configured to generate an electric current when being irradiated with electromagnetic radiation such as light. The control entity may then compensate varying lightning conditions by a corresponding control of the individual solar cells into a state in which they perform at their maximum power point.

In an alternative embodiment, the plurality of cells may be a plurality of battery cells or capacitors being operable as voltage sources. For example, such battery cells may be ion battery cells, more particularly Lithium ion battery cells. A number of such battery cells may be serially connected. In a scenario in which one of these battery cells changes regarding at least one property, the control entity may control this array of voltage sources so as to operate as a power source and to output power in accordance with the adequate power point of the battery cells.

The control entity may be adapted as an impedance converter for adjusting an impedance of each of the plurality of cells so that the output current of each of the plurality of cells is the same. Hence, the output resistance of the individual cell control entity portions may be varied.

In an embodiment, the regulation of the individual DC/DC converters towards a maximum power output of the assigned cell or cells may have the impact that differences in the maximum power point power of individual cells or cell groups result in different DC/DC converter output voltages. However, the entirety of the serially connected cells altogether still provides the voltage regulated by the subsequent power inverter (or central DC/DC converter). For instance, in the case of a shadowing of cells this may have the consequence that the output voltage of the assigned DC/DC converter is regulated towards the value of the cell voltage or the cell can be entirely short-circuited by means of two transistors. The circuit may then serve as an active bypass diode. However, this reduced voltage can be compensated by the other DC/DC converters (of the non-shadowed cells) up to an output voltage maximum value which is predefined for each DC/DC converter.

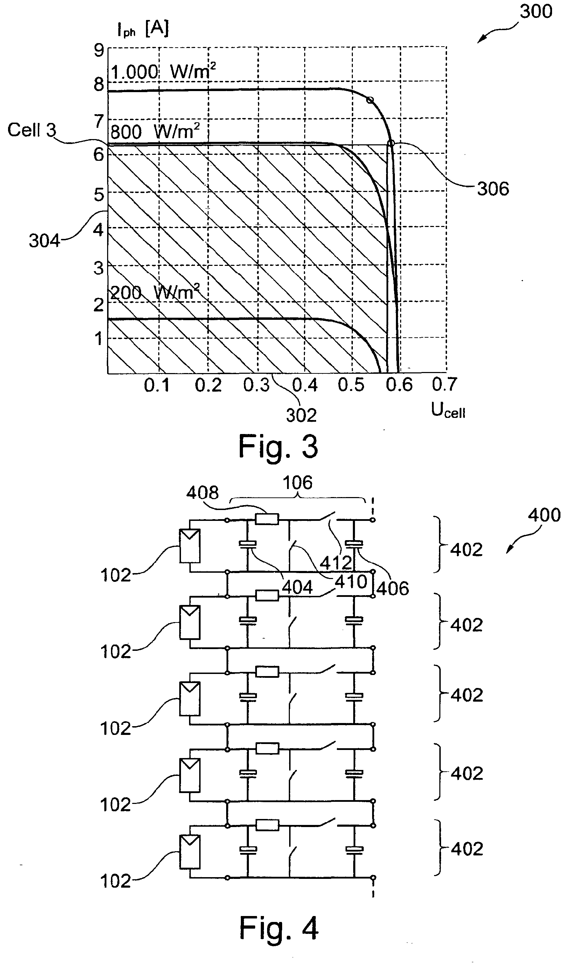

The topology of the DC/DC converter may be preferably that of a synchronous step-up converter, so that the output voltage compared to the input voltage (cell voltage) may be increased (for instance by a factor of 4), and the output current may be reduced by the same factor (compare Fig. 4).

According to an exemplary embodiment of the invention, the number of serially connected cells (output side connected DC/DC converter) may be selected in such a manner that for the scenario of a network coupled photovoltaic plant an optimum input voltage regarding efficiency can be obtained for a downstream power inverter. This voltage can be regulated by the power inverter onto a constant value. For the case of a battery coupled photovoltaic plant a total voltage can be obtained which corresponds to the nominal battery voltage or the nominal input voltage of an optionally connected (central) DC/DC converter.

In an embodiment, the circuitry can be integrated in solar modules with back contacted cells or with concentrator cells.

The direct parallel connection of strings (serially connected cells or modules) can be realized in such a cell arrangement when the serially connected outputs of the DC/DC converters mutually behave like a power source (with voltage limitation). Upon failure of the voltage regulation of the downstream power inverter (or upon break of a connection), the output voltages of the individual DC/DC converters can be regulated upwardly to a predefined limit. However, this voltage limit can be varied depending on the current in a way that with an increasing current this limit can be reduced so that eventual circular currents can be suppressed which can result from deviating voltages of the individual strings.

In the case of a short circuit of the connections of a module or an entire string, the current may be limited to a very small value. With an output voltage which is significantly below the value which would correspond with the present output current of the cell under normal conditions, the DC/DC converter can be regulated immediately on a minimum output voltage or disables an output side transistor and thus disables the solar cell.

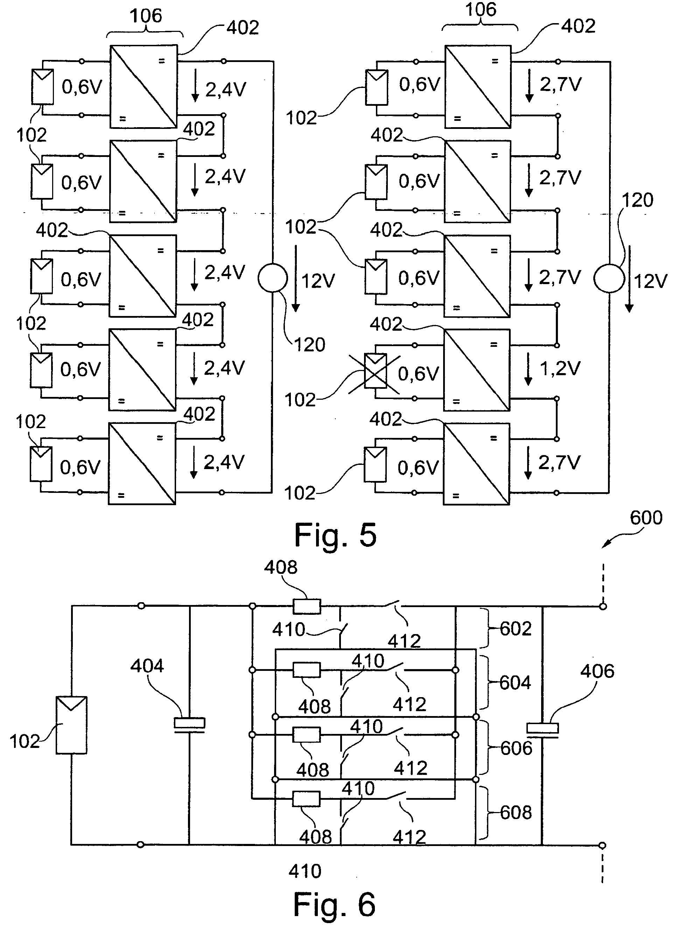

At least two of the plurality of DC/DC converters may comprise at least one output capacitor which at least two output capacitors may be connected serially for smoothing an electric output signal of the cell arrangement. This means that measures may be taken to run the serialized converters out of phase or with different switching frequencies. The DC/DC converter may be realized in a multiphase configuration so that under a nominal operation a ratio between output and input voltage is obtained which corresponds to the number of selected phases (for instance a factor 4 in a four phase embodiment). Hence, current and voltage ripples can be reduced or minimized on an output side as well as on an input side. By the serial connection (typically of a large number) of DC/DC converter output capacitors having voltage ripples which are not correlated regarding their phase position, a further smoothing in relation to the overall voltage can be obtained (compare Fig. 5).

The cell arrangement may comprise a converter decorrelation unit adapted for decorrelating the plurality of DC/DC converters by operating the plurality of DC/DC converters with different switching frequencies, and/or by operating the plurality of DC/DC converters with a phase shift relative to one another. When different cells and corresponding DC/DC converters are handled with slightly differing switching frequencies and/or with slightly phase-shifted signals, it may be possible to smooth the output by efficiently suppressing the generation of ripples. In one embodiment, such all intentional decorrelation or decoupling may be achieved by a phase shifted deterministic synchronisation of the different cell-converter blocks. In another embodiment, such an intentional decorrelation or decoupling may be achieved by a statistic frequency-shifting desynchronisation of the different cell-converter blocks.

In an embodiment, the control entity, particularly when configured as a number of DC-DC converters, may be controllable by a control signal and may comprise a decoding unit adapted for decoding the control signal and for accepting to be controlled by the control signal only upon determining that the decoded control signal is in accordance with a safety code of the control entity.

In the electronic circuitry, the control logic of the DC/DC converter can be connected in an optimum manner with a decoder logic. Such a decoder logic may control signals which are transmitted from a central unit in form of a modulated current over the entire serially connected output capacitors to the individual DC/DC converters. In this way, a theft protection or the like may be realized by encoding the control signals. Also, charging of batteries may be controlled.

In an embodiment in which the cells are photovoltaic cells, the current flow direction in the circuitry may be reversed so that the photovoltaic cells are heated under the influence of ohmic losses. By taking this measure, an anti-icing feature may be provided in which photovoltaic cells can be de-iced before use.

The aspects defined above and further aspects of the invention are apparent from the examples of embodiment to be described hereinafter and are explained with reference to these examples of embodiment.

The invention will be described in more detail hereinafter with reference to examples of embodiment but to which the invention is not limited.
Fig. 1 illustrates a solar cell arrangement according to an exemplary embodiment of the invention.
Fig. 2 illustrates a solar cell arrangement and an equivalent circuit thereof.
Fig. 3 is a diagram illustrating a dependency between an output current and a voltage of a cell arrangement as well as a Maximum Power Point focused on according to an exemplary embodiment of the invention.
Fig. 4 shows a serial connection of photovoltaic cells with an integrated DC/DC converter according to an exemplary embodiment of the invention.
Fig. 5 illustrates a serial connection of photovoltaic cells with integrated DC/DC converters according to an exemplary embodiment of the invention, wherein the left-hand side of Fig. 5 shows a situation under ideal circumstances with a uniformly distributed output voltage, and the right-hand side of Fig. 5 illustrates an unequal distribution of output voltages which may be caused by shaded cells.
Fig. 6 illustrates a multiphase DC/DC converter with four synchronous step-up converters in parallel which can be implemented according to an exemplary embodiment of the invention.
Fig. 7 illustrates a solar cell arrangement according to an exemplary embodiment of the invention.
Fig. 8 and Fig. 9 illustrate cell arrangement according to other exemplary embodiment of the invention.
Fig. 10 illustrates a solar cell arrangement similar to the embodiment of Fig. 4 according to still another exemplary embodiment of the invention.
Fig. 11 illustrates a solar cell arrangement similar to the embodiment of Fig. 1 according to still another exemplary embodiment of the invention.
Fig. 12 illustrates a cell arrangement according to still other exemplary embodiment of the invention.

The illustration in the drawing is schematically. In different drawings, similar or identical elements are provided with the same reference signs.

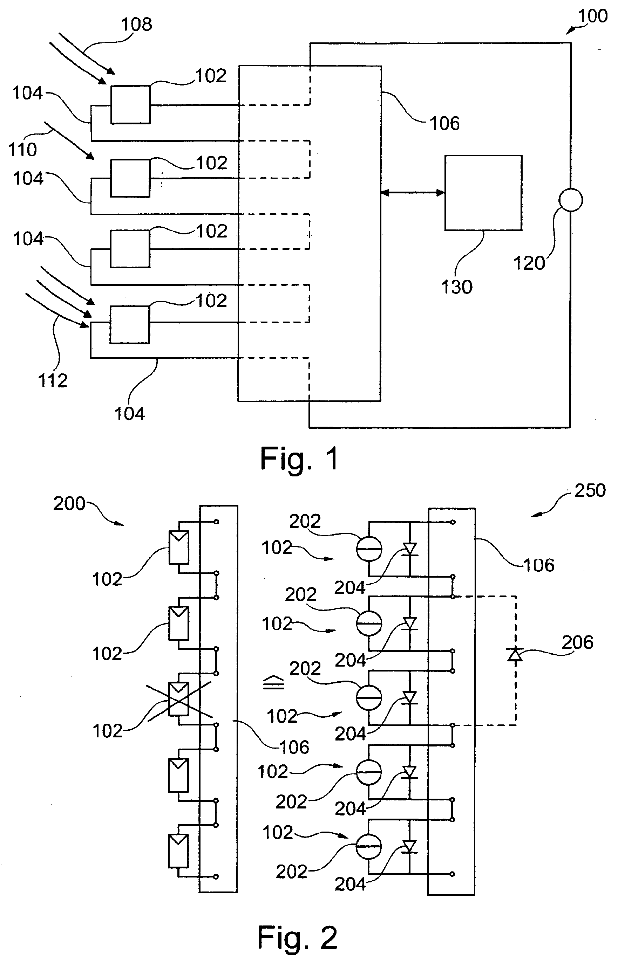

In the following, referring to **Fig. 1**, a solar cell arrangement 100 according to an exemplary embodiment of the invention will be explained.

The solar cell arrangement 100 comprises a plurality of solar cells 102 which are connected serially to one another as indicated schematically by an electrically conductive connection 104. In addition to the solar cells 102, the cell arrangement 100 comprises a control circuitry 106. The control circuitry 106 is interconnected into the linear sequence of solar cells 102, that is connected to the electrically conductive connection 104 as shown schematically in Fig. 1 as well. The control circuitry 106 operates the solar cells 102 as electric power sources in accordance with the present operation conditions so that the solar cells 104 always provide a maximum electric output power achievable under the present operation conditions.

In the present scenario of Fig. 1, a first irradiance intensity 108 illuminates the uppermost solar cell 102, and a lower irradiance intensity 110 illuminates the second solar cell 102. The third solar cell 102 is in a shadow condition so that presently basically no light falls onto the light sensitive portion of the solar cell 102. Very large irradiance intensity 112 illuminates the lowermost solar cell 102 which therefore is capable, under the present illumination conditions, to generate a maximum power.

The shadowed cell 102 and the cell 102 being illuminated with the low intensity 110 can conventionally cause problems in the serial arrangement of the solar cells 102 since they would represent very high impedances. However, due to the presence of the control circuitry 106, all solar cells 102 may be controlled in such a manner that they are all operated at a respective individual maximum power point, that is to say in an operation mode in which their individual power contribution is maximum under consideration of the individual irradiance conditions 108, 110, 112.

The electric power generated by the solar cells 102 by conversion of light intensity into electric energy can provide a load 120 with power. For instance, load 120 can be a grid-connected inverter.

In order to control the solar cell arrangement 100, a user may bidirectionally communicate, via an input/output unit 130, with the control unit 106. The input/output unit 130 may allow the user to supply control commands to the control unit 106 and may be provided with operation parameters at which the solar cell arrangement 100 is presently operated.

Thus, maximum power point control may be performed at cell level with the cell arrangement 100.

In the following, some basic recognitions of the present inventor will be mentioned based on which exemplary embodiments of the invention have been developed.

A photovoltaic installation may be built up of arrays with multiple panels connected to strings, where all the panels of a string may be connected in series. Each panel itself in turn may comprise solar cells connected in series. Thus, in order to achieve appropriate input voltages for instance for the grid-connected inverters, up to 1000 solar cells are connected in series.

To guarantee that all cells in the circuit have their maximum power point at the same current, the cells of one module may be selected according to their nominal MPP-current. A similar selection procedure may be applied for the series connection of the modules.

Some circumstances, however, may provoke that the initially perfectly matched cells might differ in their current/voltage behaviour during lifetime for instance due to aging effects. Photovoltaic installations are also impacted by shading conditions, for instance from tree branches, power cables, soiling or even from bird droppings. Small shaded areas of for instance just a few cells can drop the panel's output power to less than half. In proportion the impact of shading on a solar panel has much greater influence on the delivered output power than the footprint of the shadow. This significantly limits the scope of application for typical residential solar installations.

**Fig. 2** shows on the left-hand side a serial connection 200 of solar cells 102 in combination with a schematically indicated control circuit 106. An equivalent circuit 250 on the right-hand side shows that each of the solar cells 102 can be considered as a parallel circuit of a current source 202 and a diode 204. Moreover, a bypass diode is circuited antiparallel to the diodes 204 and is denoted with reference numeral 206.

Assuming that for example the third cell (counted from above and indicated with a cross in Fig. 2) is shaded, the current source 202 would deliver less current thus representing high impedance for the other sources 202. Even in case of only little difference in the photo-current, the non-shaded cells 102 would shift their operation point more towards idle mode (higher voltage, less current) and thus will not work any longer in a Maximum Power Point, see Fig. 3.

**Fig. 3** illustrates a diagram 300 having an abscissa 302 along which a cell voltage is plotted. Along an ordinate 304 a photovoltaic current is plotted. A maximum power point 306 is an operation point of a solar cell 102 at which its power output is maximum, as indicated by the hatched area in Fig. 3. Embodiments of the invention intend to permanently operate individual cells 102 at or close to the maximum power point 306 which can change upon change of the conditions (such as temperature, illumination, chemical properties of the constituents of the cell 102). Upon detection of such changes, the operation point may be permanently tracked or updated.

Again referring to Fig. 2, depending on the total number of cells 102 in series, the voltage at the shaded cell 102 can also become reverse biased and can damage the shaded cell 102. A Bypass diode 206 in (anti-)parallel of a certain number of cells 102 (typically up to 30) may serve as a current path for the other cells 102 and prevent damage.

The trend towards cost-effective multicrystalline solar panels is to use large and very thin wafers with further improved efficiencies. So the dimension of modern cells may be of 210x210mm² and below 200µm of thickness and they may provide about 15A nominal current. This high current is not easy any more to be handled on the front side of the cells 102. This is why back-contacted solar cells may be implemented according to embodiments of the invention.

The back-contacting technology moreover allows the implementation of additional electronic circuits on the rear side of the module, which makes it also feasible to add bypass-diodes 206 at cell-level or even miniaturized power-electronic circuits, which is performed according to exemplary embodiments.

Another technology which may be implemented is represented by the concentrator photovoltaic cells, which also provide currents of up to 15 A at cell voltages of about 2.5 V. Between the single cells enough space is left to implement electronic circuits. Miniaturized power-electronic circuits (Step-up-converters) at cell level will also be able to improve overall efficiency in this technology by stepping up the cell-voltage in favour of lower current.

**Fig. 4** illustrates a cell arrangement 400 according to an exemplary embodiment of the invention including a serial connection of photovoltaic cells 102 with integrated DC-DC Converters 402.

Fig. 4 shows that in a basic version of the control circuitry 106 is formed by a number of sections 402 each of which being assigned to a corresponding one of the solar cells 102. Each of these sections 402 comprises capacitors 404, 406 as well as an inductor 408, a first switch 410 and a second switch 412.

According to this embodiment of the invention, every cell 102 (or a group of serialized cells 102) is combined with a step-up-converter 402. Instead of a direct interconnection of the cells 102, the output-voltages of the step-up converters 402 are connected in series building up module output voltages, which are typically up to 4 times higher (e.g. in case of four phase step-up converters) than in standard series connection of cells 102, with the advantage of delivering a four times lower current. Consequently, input and output ripple currents may be reduced or minimized so that capacitors may be dimensioned very small or may even be avoided in the circuitry.

The total number of interconnected cells 102 (each with its dedicated DC-DC-Converter 402) corresponding to a certain number of modules may be chosen according to the desired DC-voltage. This can be a value of about 600V to 700V for a grid-connected three-phase inverter or also only 12V to 14.2V in case of an automotive application. In either case the string may perform as a power source with voltage limitation.

Provided that each cell 102 of the string provides exactly the same (MPP-) power, all DC-DC-Converters 402 will show exactly the same output voltage. When the overall voltage of the grid-connected converter or a battery varies, the DC-DC-Converter 402 outputs will follow immediately and the voltage will still be split into equal parts (lower voltage will be compensated by higher current and vice-versa so that all cells 102 of the string are continuously delivering their maximum power).

The DC-DC-Converters 402 may also compensate unequally distributed cell power, for instance caused by shadowing of individual cells 102, by adapting the output voltage proportionally to the available cell power according to the actual (new) Maximum-Power-Point 306. As the remaining (non-shaded) cells 102 are still trying to deliver their Maximum-Power, the output voltage of their dedicated DC-DC-Converters 402 will rise and will fully compensate the lost voltage of the shaded cell 102.

Therefore the overall power loss due to the shaded cell 102 is no longer effected over-proportionally to the shadows footprint.

**Fig. 5** shows a serial connection of photovoltaic cells 102 with integrated DC-DC Converters 402 according to an embodiment of the invention in two different scenarios:
a), Under ideal circumstances with uniformly distributed output voltage on the left hand side
b) Unequal distribution of output voltages caused by for instance a shaded cell 102 on the right hand side

In other words, Fig. 5 shows on the left-hand side a cell arrangement according to an exemplary embodiment of the invention under normal illumination conditions, and on the right-hand side the same cell arrangement in a scenario in which one of the cells 102 (indicated with a cross) is shaded.

Through the flexibility gained by the DC-DC-Converters 402, any number of strings can be connected in parallel.

To assure that parallel strings working at no load do not create reverse currents in "weaker" strings (for example shaded strings or just because of slightly lower voltage limits) the voltage limit of each Converter 402 may be programmed in dependence of the output current. At higher (forward-) currents the voltage limit is reduced (electronically realized output resistor) whereas with increasing reverse currents the voltage limit is increased. This guarantees a stable behaviour even at no-load operation.

In the following, an open circuit voltage protection will be explained which may be implemented according to an exemplary embodiment. For providing such an open circuit voltage protection, the control entity may be adapted to, upon detecting an open circuit condition of a cell, control an output voltage of the cell having the open circuit condition (for instance a condition in which an electric path is open and is not connected to the surrounding circuitry, for instance on a cell level) to be below a predefined threshold value or at a predefined value.

In case of a communication line, the output voltage can be kept at a very low value until an enable signal is applied, so that the output voltage of the total string of cells may be kept within the limit of extra low voltage when the string is out of operation.

In case of a step-up converter the output voltage may be kept low by closing the low-side switch (short-circuiting the cell).

Without a communication line an open circuit situation can be detected by every single DC/DC converter, e.g. by monitoring the voltage at the output capacitor, while still shortcircuiting the cell or decoupling it from the output-capacitor. The converter only starts operation (maximum power-point control), when the output capacitor voltage is above a certain threshold value. This will only happen when a power source e.g. a gridconnected converter is coupled to the whole string of cells.

A short-circuit protection is another advantageous feature, which can be realised via the DC-DC-Converter 402. Along with a general current limitation (corresponding with the highest possible occurring current at optimum circumstances) the control of the DC-DC-Converter 402 can additionally observe the output voltage dynamically. If this voltage is significantly lower than the voltage corresponding to the actual MPP-Power of the cell 102, a short-circuit condition is detected. As a result the converter 402 may be set on minimal output voltage or will be switched-off entirely. In case of a step-up converter this save state may be represented by short-circuiting the cells internally by closing the low-side switch.

For the realization of the step-up converter 402 it may be advantageous to choose a multiphase topology in order to minimize ripple currents in the capacitors. This can be optimized if the ratio between output voltage (particularly the average output voltage) and input voltage (particularly the average input voltage) is in correlation with the number of phases, thus reducing capacitor ripple currents, for instance to zero or basically to zero. Typical ratios can be 2, 3, 3/2, 4, 4/3.

More particularly, when the number of phases of the multiphase DC/DC converter is N (N may be an integer number larger than one), the ratio between the output voltage and the input voltage is N/(N-1). In a preferred embodiment, N is larger than or equal to three, since this allows for a sufficiently fine suppression of voltage ripples. For instance, a three-phase converter may correspond to a ratio of 3/2, and a four-phase converter may correspond to a ratio of 4/3. Such a selection rule for the correlation between the number of phases and the voltage ratio may result in an optimum degree of efficiency and a strong suppression of ripples. Hence, it may be advantageous when designing the cell arrangement to adjust the number of phases in relation to the nominal ratio between output and input voltage.

**Fig. 6** shows a multiphase DC-DC Converter 600 with four synchronous step-up converters 602, 604, 606, 608 in parallel, for a cell arrangement according to an exemplary embodiment of the invention.

The multiphase DC/DC converter 600 comprises a first phase section 602, a second phase section 604, a third phase section 606, and a fourth phase section 608.

In practice there may remain some ripple current, as the ratio between output voltage and cell voltage will not keep constantly at exact the same value. This is why small capacitors 404, 406 (e.g. ceramic-based) should be used. In addition, remaining voltage ripples at the output capacitors 404, 406 will be partially compensated by the series connection of the many non-correlated (slightly different switching frequencies, different phases) DC-DC-Converters 602, 604, 606, 608.

The series connection of the output capacitors 404, 406 are building up a low impedance path for higher-frequent signals, which allows the (power-line) transmission of current-coupled control signals.

With an additional decoding logic in connection with the DC-DC-converter further functionalities like anti-theft protection, anti-icing or voltage control in case of battery supply can be realised.

When a photo-diode (solar-cell) is connected with a voltage source, which provides a higher voltage value than the photoelectric voltage, the photo-diode gets forward biased and behaves as an electrical load (consuming energy). This can be utilized for heating up the cell in case of snow, ice or condensation at the front side of the solar panel. In combination with a communication link (e.g. power-line carrier) the control circuitry (for instance the DC-DC-converters) can be forced to change the energy direction and fulfil a heat-up functionality.

The multiphase DC/DC converter 600 has the inductors 408 which are coupled within the cell arrangement to provide for a current-compensation. Particularly, the inductors 408 may be coupled magnetically (for instance to form one or more transformers) to provide for a coupled inductor architecture. Such a for instance antiparallel coupling may provide for a current compensation within the multiphase DC/DC converter 600.

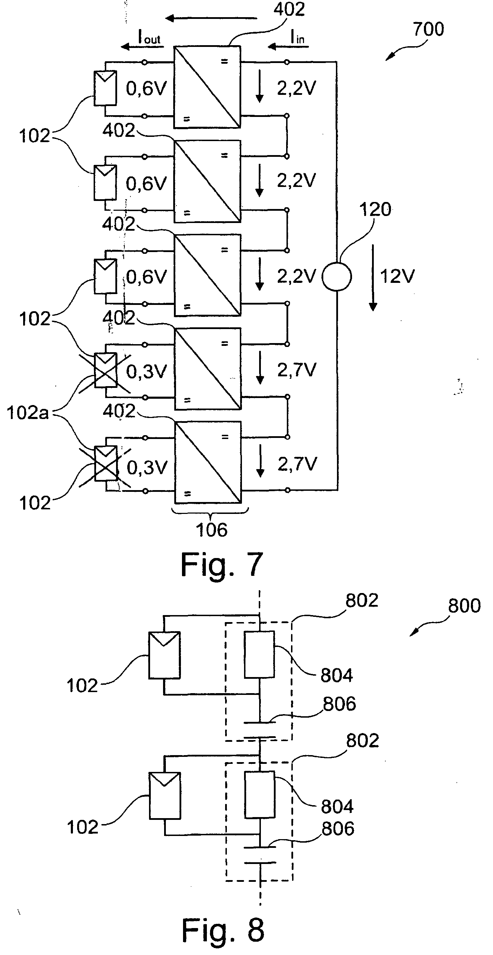

**Fig. 7** shows a cell arrangement 700 comprising a serial connection of photovoltaic cells 102 with integrated DC-DC Converters 402 according to an embodiment of the invention in a scenario with inverted energy flow and unequal distribution of output voltages (now input-voltages) in order to concentrate energy to the most shaded cells 102. Cells 102a denote cells 102 being covered by ice, snow or dust. The grade of shading can be ascertained e.g. by measuring the short-circuit current of the cell and comparing this value with a transmitted value measured by a radiation sensor.

The power supply for operating the solar cells as a load (forward-biased) can be provided by a bidirectionally operating grid-converter or via a separate converter (DC/DC or AC/DC) which utilizes the grid or an energy storage device (battery, supercap, etc.) as an energy source)

In the following, power control of serialized battery or capacitor cells will be discussed.

In case of battery or capacitor cells with dedicated serialized DC/DC-converters an optimized power management may be achieved by providing a communication between the cell-level converters and a central or superordinate (for instance provided in common for multiple or control units (such as DC/DC-converters) of the control entity) management unit which may be arranged for instance at package level. Based on a communication link (e.g. power-line carrier) the DC-DC-converters may receive the information needed to properly or optimally distribute the power (voltage) contribution to every single cell or group of cells.

As one exemplary method, the communication link can serve for transmitting the desired output voltage and the state of charge values for the total cell pack to the DC/DC-converters wherefrom these are deriving their own output voltage reference value taking into account their individual state of charge in relation to the state of charge of the whole cell pack. This means that the desired output voltage value for the total cell pack divided by the number of cells serves as the base reference, which then may be modified according to the individual state of charge of the cell (or the group of cells). When the individual state-of-charge is lower than the average value the converter may reduce its output-voltage in order to contribute less to the total cell-package output power. Is the individual state-of-charge higher than the average value, the converter may increase its output-voltage in order to contribute more to the total cell-package output power. The exterior voltage control loop may compensate this state-of-charge dependent individual correction of each converter.

Thus the DC/DC converters may be both regulating the overall output voltage according to the desired value and accomplishing charge-balancing at the same time. Such a control scheme is applicable both for charging and discharging.

Next, it will be explained as to how a shadowed cell may be operated according to an embodiment of the invention.

When the maximum power point of a cell or a group of cells results in an output voltage of the converter slightly above or below the voltage of the cells, the high-side switch is going to be closed continuously. When the cell voltage is not high enough for supplying the gate drives of the switches then both switches may be turned off. In case that other cells are still driving an output current, this current will reverse-bias the output capacitor. At a certain reverse voltage both switches (high-side and low-side) may be turned on, acting as a low-ohmic bypass circuit.

**Fig. 8** illustrates a solar cell arrangement 800 (which may alternatively also be configured as a battery cell arrangement) according to another exemplary embodiment of the invention. This embodiment shows an alternative configuration as compared to, for instance, the DC/DC converter 402 of Fig. 4.

Although only two blocks of cells 102 and assigned control units 802 (wherein the entirety of the control units 802 form the "control entity") are shown in Fig. 8, it is of course possible that the architecture of Fig. 8 can be extended to any desired number of blocks.

Each of the control units 802 is constituted of a buck-boost converter 804 (or any other appropriate power electronics member) and a capacitor 806.

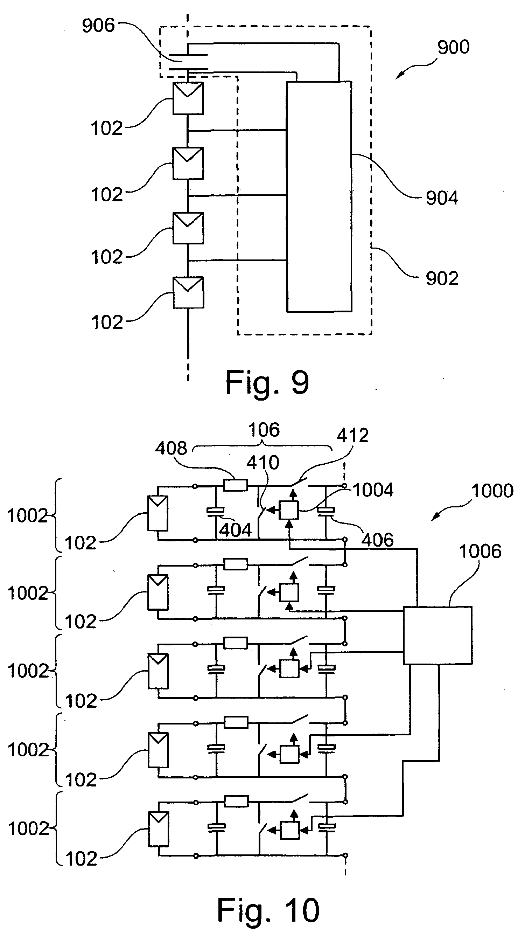

**Fig. 9** illustrates a block 900 of a battery cell arrangement (which may alternatively also be configured as a solar cell arrangement) according to another exemplary embodiment of the invention.

Although only one block of cells 102 and an assigned control unit 902 (wherein the entirety of control units 902 form the "control entity") are shown in Fig. 9, it is of course possible that the architecture of Fig. 9 can be extended to any desired number of blocks.

Each of the control units 902 comprises a power-conditioning unit 904 adapted for manipulating an amount of energy stored in the plurality of cells 102, particularly for extracting energy from the cells 102.

The cell arrangement, more precisely each of the control units 902 comprises a buffer capacitor 906 (such as a ceramics capacitor) coupled to the power-conditioning unit 904 for storing energy provided by the power-conditioning unit 904. The power-conditioning unit 904 may for instance be transformer-based, i.e. may comprise one or more transformers (not shown). This shown architecture results in a voltage stabilisation or smoothing of the cells 102 due to the cooperation of the buffer capacitor 906 and the power-conditioning unit 904. When the power-conditioning unit 904 extracts, if required, energy from individual ones of the cells 102 and stores this energy in the buffer capacitor 906, both charge-balancing and power conditioning may be achieved.

**Fig. 10** illustrates a solar cell arrangement 1000 similar to the embodiment of Fig. 4 according to still another exemplary embodiment of the invention.

The embodiment of Fig. 10 differs from the embodiment of Fig. 4 particularly in that control units 1002 (together constituting a control entity) comprise the DC/DC converters of Fig. 4 but additionally a separate control member 1004 for each block. Each control member 1004 controls operation of the switches 410, 412 (for instance MOSFETs) of the assigned DC/DC converter. However, in addition to the block-related control members 1004, solar cell arrangement 1000 comprises a central management entity 1006 which, in turn, centrally provides all control members 1004 with corresponding control signals. Central management entity 1004 is thus adapted for centrally controlling multiple of the plurality of cells 102 via control signals transmitted from the central management entity 1004 to the control members 1004.

In the shown embodiment, the central management entity 1004 is connected to the control members 1004 by separate control lines. Alternatively, it is also possible that the central management entity 1004 is connected to only one of the control members 1004 for supplying control signals, and that the various control members 1004 are coupled serially to one another for conveying the control signals to the remaining control members 1004.

For instance, the central management entity 1006 may comprise (or may be coupled to) a snow-coverage detector capable of detecting whether one or more of the cells 102 are covered with snow and are therefore shaded. Such a snow-coverage detector may comprise a temperature sensor and/or a humidity sensor and/or a weight sensor and/or a correlation sensor correlating detected parameters to further information (such as time of day data, voltage or current values provided by the cells, etc.). This may allow to distinguish between snow coverage and, for instance, night.

When snow coverage is detected for all cells 102 or for individual cells 102, respectively concerned cells 102 may be supplied, under control of the central management entity 1006, with electric power to be conducted to the respective cell(s) 102 for de-icing by ohmic heat. This may allow for a very specific and therefore environmental-protecting an energy-saving de-icing of individual cells 102.

Additionally or alternatively to the described de-icing function, the central management entity 1006 may also provide one or more of the following or other control tasks:
- centrally switching individual or all cells 102 on or off
- short-circuit detection of cells blocks
- theft detection and, optionally, correspondingly disabling use of the cell arrangement
- current detection
- in case of battery cells: measuring state of the charge of individual or all battery cells and/or selectively charging battery cells having a charging state below a predefined threshold.

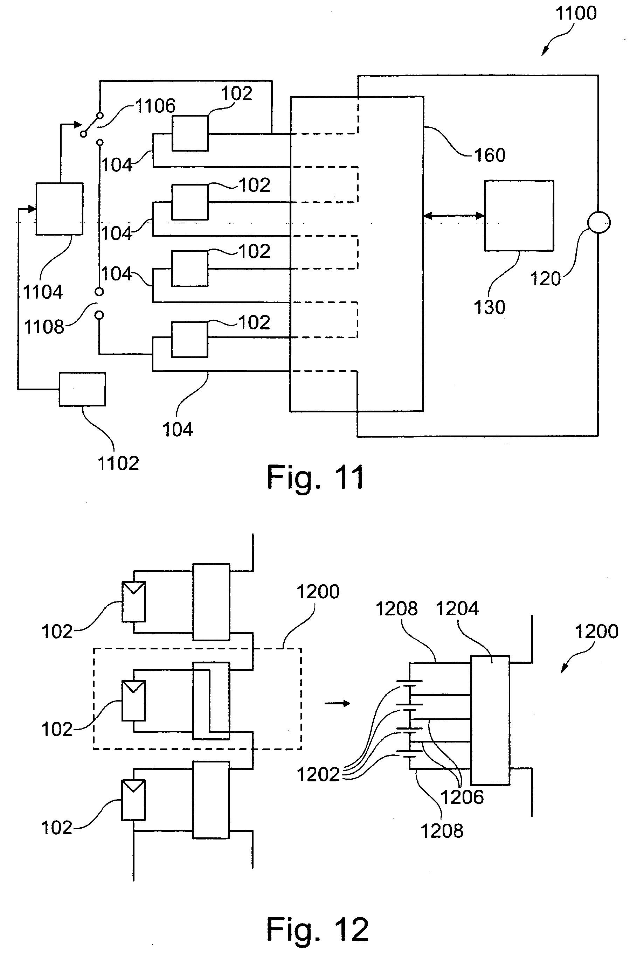

**Fig. 11** illustrates a solar cell arrangement 1100 similar to the embodiment of Fig. 1 according to still another exemplary embodiment of the invention.

The embodiment of Fig. 11 differs from the embodiment of Fig. 1 particularly in that a de-icing function is additionally provided. In case a shading sensor 1102 (may comprise a temperature sensor and/or a humidity sensor and/or a weight sensor) detects shading of cells 102 caused by snow, shading sensor 1102 may send a corresponding sensor signal to a central management entity 1104. Upon receipt of this signal, central management entity 1104 may trigger that a switch 1106 is closed, thereby coupling an electric energy source 1108 to the solar cells for removing the snow due to ohmic heat. When the shading sensor 1102 reports to the central management entity 1104 that no shading can be detected any more, central management entity 1104 may re-open switch 1106.

Thus, in the embodiment of Fig. 11, central management entity 1104 is adapted for centrally controlling all photovoltaic cells 102 to be selectively or temporarily provided with an electric drive signal heating the photovoltaic cells 102 for removing frozen or condensated material from a surface of the plurality of photovoltaic cells 102.

**Fig. 12** illustrates a cell arrangement according to still other exemplary embodiment of the invention. It differs from the architecture of, for instance, Fig. 9 in the constitution of a block 1200 shown in more detail on the right hand side of Fig. 12. Multiple electric sources 1202 (substituting cell 102) are coupled with a common control unit 1204 (similar to block 904). Intermediate connection lines 1206 and edge connection lines 1208 are provided. In this embodiment the control entity 1204 may be a non-isolated inverting or a transformer-coupled DC-DC converter, preferably with the ability of reversing the energy direction.

This embodiment provides the same features as the base topology. In case that the cells are photovoltaic cells the control entity can be operated as a power source with maximum power control of the cell. Reversing the energy direction, the cells become forward-biased and will be heated-up.

Battery-cells or capacitor-cells can be charged and discharged by connecting the string of the serialized cells to a voltage source or a load, in a way that the control-entities are regulating charge- or discharge current respectively for each cell or group of cells individually according to predefined criteria.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. A cell arrangement (100), comprising
a plurality of at least partially serially coupled cells (102) each being adapted to provide electric energy;
a control entity (106) interconnected between the plurality of cells (102) and being adapted to operate at least a part of the plurality of cells as an electric power source in accordance with present operation conditions so that at least the part of the plurality of cells provides a maximum electric output power achievable under the present operation conditions and so as to be in accordance with a predefined cell operation criteria, **characterized in that**
the control entity comprises at least one DC/DC converter (402), each of which being assigned to one of or to a group of the plurality of cells (102),
wherein the at least one DC/DC converter is a multiphase DC/DC converter.

2. The cell arrangement according to claim 1, wherein the control entity (106) is adapted to control an output current of the plurality of cells (102) so that the corresponding electric output power of the respective cells is always maintained at a presently achievable maximum or optimum level regardless of changes of an operation condition of at least a part of the cell arrangement.

3. The cell arrangement according to any one of the above claims, wherein at least one of the DC/DC-converters has different modes of operation according to an actual load,
in particular wherein the at least one of the DC/DC-converters has a cycle skipping or burst mode at a low load.

4. The cell arrangement according to claim 1 or any one of the above claims, wherein the control entity (106) is adapted as a power source with a voltage limitation
where the voltage limit is variable in dependence of an output current in order to allow a stable operation of parallel strings of cells.

5. The cell arrangement according to any one of the above claims, wherein the multiphase DC/DC converter has one or more inductors coupled within the cell arrangement to provide for a current-compensation.

6. The cell arrangement according to any one of the above claims, wherein a number of phases of the multiphase DC/DC converter corresponds to a ratio between an output voltage and an input voltage.

7. The cell arrangement according to claim 6, wherein, when the number of phases of the multiphase DC/DC converter is N, the ratio between the nominal output voltage and the nominal input voltage is N/(N-1)
in particular wherein N is larger than or equal to three.

8. The cell arrangement according to claim 1 or any one of the above claims, wherein a number of phases in operation is selected according to the actual load and the ratio between actual input and output voltage.

9. The cell arrangement according to claim 1 or any one of the above claims, wherein at least a part of the plurality of cells is arranged at a front surface of a substrate and the control entity is arranged at a rear surface of the substrate opposing the front surface.

10. The cell arrangement according to claim 1 or any one of the above claims, wherein the plurality of cells is a plurality of photovoltaic cells each being operable as a current source and/or
wherein the plurality of cells is a plurality of fuel cells or thermoelectric cells or thermo-magnetic cells or capacitor cells or battery cells, particularly a plurality of Lithium ion battery cells, each being operable as a voltage source.

11. The cell arrangement according to claim 1 or any one of the above claims, wherein the control entity is adapted as an impedance converter for adjusting the output impedance, corresponding to a current or a voltage source, of each of the plurality of cells to an output impedance of each of the plurality of cells corresponding to a power source with a constant product of current and voltage.

12. The cell arrangement according to claim 1 or any one of the above claims, wherein the plurality of cells is a plurality of photovoltaic cells;
wherein the control entity is adapted for controlling at least a part of the plurality of photovoltaic cells to be provided with an electric drive signal heating the photovoltaic cells for removing frozen or condensated material from a surface of the plurality of photovoltaic cells
in particular wherein the electric drive signal is forward-biasing the solar cells, thus heating the photovoltaic cells.

13. The cell arrangement according to claim 1 or any one of the above claims, wherein the plurality of cells is a plurality of photovoltaic cells;
wherein the cell arrangement comprises a central management entity adapted for centrally controlling at least a part, particularly all, of the plurality of photovoltaic cells to be provided with an electric drive signal heating the photovoltaic cells for removing frozen or condensated material from a surface of the plurality of photovoltaic cells.

14. A method of operating a cell arrangement (100), the method comprising serially coupling at least a part of a plurality of cells (102) each being adapted to provide electric energy;
interconnecting a control entity (106) between the plurality of cells, wherein the control entity comprises at least one DC/DC converter (402), each of which being assigned to one of or to a group of the plurality of cells, wherein the at least one DC/DC converter is a multiphase DC/DC converter;
operating, by the control entity, at least a part of the plurality of cells as an electric power source in accordance with present operation conditions so that at least the part of the plurality of cells provides a maximum electric output power achievable under the present operation conditions and so as to be in accordance with a predefined cell operation criteria.

15. A program element for operating a cell arrangement, which program element, when being executed by a processor, is adapted to carry out or control a method according to claim 14.

## Patentansprüche

1. Eine Zellen Anordnung (100), aufweisend
eine Mehrzahl von zumindest teilweise seriell gekoppelten Zellen (102), wobei jede eingerichtet ist, um elektrische Energie bereitzustellen;
eine Steuereinheit (106), welche zwischen der Mehrzahl von Zellen (102) verbunden ist und eingerichtet ist, um zumindest einen Teil der Mehrzahl von Zellen (102) entsprechend vorliegenden Betriebsbedingungen als eine elektrische Energiequelle zu betreiben, so dass zumindest der Teil der Mehrzahl von Zellen eine maximale elektrische Ausgangsenergie bereitstellt, welche unter den vorliegenden Betriebsbedingungen erreichbar ist, und um vordefinierten Zellen-Betriebskriterien zu entsprechen, **dadurch gekennzeichnet, dass**
die Steuereinheit zumindest einen DC/DC Wandler (402) aufweist, wobei jeder zu einer oder zu einer Gruppe der Mehrzahl von Zellen (102) zugeordnet ist,
wobei der zumindest ein DC/DC Wandler ein Multiphasen DC/DC Wandler ist.

2. Die Zellen Anordnung gemäß Anspruch 1, wobei
die Steuereinheit (106) eingerichtet ist, um einen Ausgangsstrom der Mehrzahl von Zellen (102) zu steuern, so dass die entsprechende elektrische Ausgangsenergie der jeweiligen Zellen immer bei einem gegenwärtig erreichbaren maximalen oder optimalen Level bleibt, ungeachtet von Änderungen einer Betriebsbedingung von zumindest einem Teil der Zellen Anordnung.

3. Die Zellen Anordnung gemäß irgendeinem der vorangehenden Ansprüche, wobei
zumindest einer der DC/DC Wandler verschiedene Betriebsmodi gemäß einer aktuellen Last hat, insbesondere wobei
der zumindest eine der DC/DC Wandler einen Zyklus-überspringen- oder Burstmodus bei einer geringen Last hat.

4. Die Zellen Anordnung gemäß Anspruch 1 oder irgendeinem der vorangehenden Ansprüche, wobei
die Steuereinheit (106) als eine Energiequelle mit einer Spannungsbeschränkung eingerichtet ist, wo die Spannungsgrenze variabel in Abhängigkeit von einem Ausgangsstrom ist, um einen stabilen Betrieb von parallelen Folgen von Zellen zu ermöglichen.

5. Die Zellen Anordnung gemäß irgendeinem der vorangehenden Ansprüche, wobei
der Multiphasen DC/DC Wandler eine oder mehr Spulen hat, welche innerhalb der Zellen Anordnung gekoppelt sind, um eine Strom-Kompensation bereitzustellen.

6. Die Zellen Anordnung gemäß irgendeinem vorangehenden Anspruch, wobei eine Anzahl von Phasen des Multiphasen DC/DC Wandlers einem Verhältnis zwischen einer Ausgangsspannung und einer Eingangsspannung entspricht.

7. Die Zellen Anordnung gemäß Anspruch 6, wobei,
wenn die Anzahl der Phasen des Multiphasen DC/DC Wandlers N ist, das Verhältnis zwischen der nominalen Ausgangsspannung und der nominalen Eingangsspannung N/(N-1) ist, insbesondere wobei N größer oder gleich drei ist.

8. Die Zellen Anordnung gemäß Anspruch 1 oder irgendeinem der vorangehenden Ansprüche, wobei
eine Anzahl von Phasen im Betrieb gemäß der aktuellen Last und dem Verhältnis zwischen aktueller Eingangs- und Ausgangsspannung ausgewählt ist.

9. Die Zellen Anordnung gemäß Anspruch 1 oder irgendeinem der vorangehenden Ansprüche, wobei
zumindest ein Teil der Mehrzahl von Zellen an einer vorderen Oberfläche eines Substrats angeordnet ist und die Steuereinheit an einer hinteren Oberfläche des Substrats angeordnet ist, welche entgegengesetzt zu der vorderen Oberfläche ist.

10. Die Zellen Anordnung gemäß Anspruch 1 oder irgendeinem der vorangehenden Ansprüche, wobei
die Mehrzahl von Zellen eine Mehrzahl von Fotovoltaik Zellen ist, wobei jede als eine Stromquelle funktionsfähig ist, und/oder wobei
die Mehrzahl von Zellen eine Mehrzahl von Brennstoffzellen oder thermoelektrischer Zellen oder thermomagnetischer Zellen oder Kondensatorzellen oder Batteriezellen ist, insbesondere eine Mehrzahl von Lithium Ionen Batterie Zellen, wobei jede als eine Spannungsquelle funktionsfähig ist.

11. Die Zellen Anordnung gemäß Anspruch 1 oder irgendeinem der vorangehenden Ansprüche, wobei
die Steuereinheit als Impedanzwandler zum Einstellen der Ausgangsimpedanz entsprechend einer Strom- oder einer Spannungsquelle eingerichtet ist, von jeder der Mehrzahl von Zellen zu einer Ausgangsimpedanz von jeder der Mehrzahl von Zellen, welche einer Energiequelle mit einem konstanten Produkt von Strom und Spannung entsprechen.

12. Die Zellen Anordnung gemäß Anspruch 1 oder irgendeinem der vorangehenden Ansprüche,
wobei die Mehrzahl von Zellen eine Mehrzahl von Fotovoltaik Zellen ist;
wobei die Steuereinheit zum Steuern von zumindest einem Teil der Mehrzahl von Fotovoltaik Zellen eingerichtet ist, um diesen ein elektrisches Antriebssignal bereitzustellen, welches die Fotovoltaik Zellen erhitzt, zum Entfernen von gefrorenem oder kondensiertem Material von einer Oberfläche der Mehrzahl von Fotovoltaik Zellen,
insbesondere wobei das elektrische Antriebssignal die Solarzellen vorwärts vorspannt, wobei dadurch die Fotovoltaik Zellen erhitzt werden.

13. Die Zellen Anordnung gemäß Anspruch 1 oder irgendeinem der vorangehenden Ansprüche, wobei die Mehrzahl von Zellen eine Mehrzahl von Fotovoltaik Zellen ist;
wobei die Zellen Anordnung eine zentrale Verwaltungseinheit aufweist, welche zum zentralen Steuern von zumindest einem Teil, insbesondere von allen von der Mehrzahl von Fotovoltaik Zellen eingerichtet ist, um diesen ein elektrisches Antriebssignal bereitzustellen, welches die Fotovoltaik Zellen erhitzt, zum Entfernen von gefrorenem oder kondensiertem Material von einer Oberfläche der Mehrzahl von Fotovoltaik Zellen.

14. Ein Verfahren zum Betreiben einer Zellen Anordnung (100), wobei das Verfahren aufweist:
serielles Koppeln von zumindest einem Teil von einer Mehrzahl von Zellen (102), wobei jede eingerichtet ist, um elektrische Energie bereitzustellen;
Verbinden einer Steuereinheit (106) zwischen der Mehrzahl von Zellen, wobei die Steuereinheit zumindest einen DC/DC Wandler (402) aufweist, wobei jeder zu einem oder zu einer Gruppe von der Mehrzahl von Zellen zugeordnet ist, wobei der zumindest eine DC/DC Wandler ein Multiphasen DC/DC Wandler ist;
Betreiben, mittels der Steuereinheit, von zumindest einem Teil der Mehrzahl von Zellen als eine elektrische Energiequelle entsprechend den vorliegenden Betriebsbedingungen, so dass zumindest der Teil der Mehrzahl von Zellen eine maximale elektrische Ausgangsenergie bereitstellt, welche unter den vorliegenden Betriebsbedingungen erreichbar ist, und um vordefinierten Zellen-Betriebskriterien zu entsprechen.

15. Ein Programmelement zum Betreiben einer Zellen Anordnung, welches Programmelement, wenn es mittels eines Prozessors ausgeführt wird, eingerichtet ist, um ein Verfahren gemäß Anspruch 14 auszuführen oder zu steuern.

## Revendications

1. Agencement de cellules (100), comprenant
une pluralité de cellules (102) couplées au moins partiellement en série, chacune d'elles étant apte à fournir de l'énergie électrique ;
une entité de commande (106) interconnectée entre la pluralité de cellules (102) et étant apte à faire fonctionner au moins une partie de la pluralité de cellules en tant que source de puissance électrique en fonction des conditions de fonctionnement présentes de sorte qu'au moins la partie de la pluralité de cellules fournisse une puissance de sortie électrique maximale atteignable dans les conditions de fonctionnement présentes et de manière à être en conformité avec un critère de fonctionnement de cellule prédéfini,
**caractérisé en ce que**
l'entité de commande comprend au moins un convertisseur CC/CC (402), chacun d'eux étant affecté à une cellule ou à un groupe de la pluralité de cellules (102),
dans lequel l'au moins un convertisseur CC/CC est un convertisseur CC/CC multiphase.

2. Agencement de cellules selon la revendication 1, dans lequel l'entité de commande (106) est apte à commander un courant de sortie de la pluralité de cellules (102) de sorte que la puissance de sortie électrique correspondante des cellules respectives soit toujours maintenue à un niveau maximal ou optimal atteignable à ce moment indépendamment de changements d'une condition de fonctionnement d'au moins une partie de l'agencement de cellules.

3. Agencement de cellules selon l'une quelconque des revendications ci-dessus, dans lequel au moins l'un des convertisseurs CC/CC a différents modes de fonctionnement en fonction d'une charge réelle,
en particulier dans lequel l'au moins un des convertisseurs CC/CC a un mode de saut de cycle ou de rafale à basse charge.

4. Agencement de cellules selon la revendication 1 ou l'une quelconque des revendications ci-dessus, dans lequel l'entité de commande (106) est apte à fonctionner en tant que source de puissance avec une limitation de tension, où la limite de tension est variable en fonction d'un courant de sortie pour permettre un fonctionnement stable de chaînes parallèles de cellules.

5. Agencement de cellules selon l'une quelconque des revendications ci-dessus, dans lequel le convertisseur CC/CC multiphase a un ou plusieurs inducteurs couplés à l'intérieur de l'agencement de cellules pour assurer une compensation de courant.

6. Agencement de cellules selon l'une quelconque des revendications ci-dessus, dans lequel un nombre de phases du convertisseur CC/CC multiphase correspond à un rapport entre une tension de sortie et une tension d'entrée.

7. Agencement de cellules selon la revendication 6, dans lequel, lorsque le nombre de phases du convertisseur CC/CC multiphase est N, le rapport entre la tension de sortie nominale et la tension d'entrée nominale est N/(N-1),
en particulier dans lequel N est supérieur ou égal à trois.

8. Agencement de cellules selon la revendication 1 ou l'une quelconque des revendications ci-dessus, dans lequel un nombre de phases en fonctionnement est sélectionné en fonction de la charge réelle et du rapport entre la tension d'entrée réelle et la tension de sortie réelle.

9. Agencement de cellules selon la revendication 1 ou l'une quelconque des revendications ci-dessus, dans lequel au moins une partie de la pluralité de cellules est agencée à une surface avant d'un substrat et l'entité de commande est agencée à une surface arrière du substrat à l'opposé de la surface avant.

10. Agencement de cellules selon la revendication 1 ou l'une quelconque des revendications ci-dessus, dans lequel la pluralité de cellules est une pluralité de cellules photovoltaïques pouvant chacune fonctionner en tant que source de courant et/ou
dans lequel la pluralité de cellules est une pluralité de piles à combustible ou de cellules thermoélectriques ou de cellules thermomagnétiques ou de cellules de condensateurs ou de cellules de batteries, particulièrement une pluralité de cellules de batteries lithiumion, pouvant chacune fonctionner en tant que source de tension.

11. Agencement de cellules selon la revendication 1 ou l'une quelconque des revendications ci-dessus, dans lequel l'entité de commande est apte à fonctionner en tant que convertisseur d'impédance pour ajuster l'impédance de sortie, correspondant à une source de courant ou à une source de tension, de chacune de la pluralité de cellules à une impédance de sortie de chacune de la pluralité de cellules correspondant à une source de puissante avec un produit constant d'intensité et de tension.

12. Agencement de cellules selon la revendication 1 ou l'une quelconque des revendications ci-dessus, dans lequel la pluralité de cellules est une pluralité de cellules photovoltaïques ;
dans lequel l'entité de commande est apte à commander au moins une partie de la pluralité de cellules photovoltaïques pour y fournir un signal d'entraînement électrique chauffant les cellules photovoltaïques pour enlever une matière gelée ou condensée d'une surface de la pluralité de cellules photovoltaïques,
en particulier dans lequel le signal d'entraînement électrique effectue la polarisation en sens direct des cellules solaires, ce qui chauffe les cellules photovoltaïques.

13. Agencement de cellules selon la revendication 1 ou l'une quelconque des revendications ci-dessus, dans lequel la pluralité de cellules est une pluralité de cellules photovoltaïques ;
dans lequel l'agencement de cellules comprend une entité de gestion centrale apte à commander centralement au moins une partie, particulièrement l'intégralité, de la pluralité de cellules photovoltaïques pour y fournir un signal d'entraînement électrique chauffant les cellules photovoltaïques pour enlever une matière gelée ou condensée d'une surface de la pluralité de cellules photovoltaïques.

14. Procédé de fonctionnement d'un agencement de cellules (100), le procédé comprenant
le couplage en série d'au moins une partie d'une pluralité de cellules (102), chacune d'elles étant apte à fournir de l'énergie électrique ;
l'interconnexion d'une entité de commande (106) entre la pluralité de cellules, dans lequel l'entité de commande comprend au moins un convertisseur CC/CC (402), chacun d'eux étant affecté à une cellule ou à un groupe de la pluralité de cellules, dans lequel l'au moins un convertisseur CC/CC est un convertisseur CC/CC multiphase ;
le fonctionnement, par l'entité de commande, d'au moins une partie de la pluralité de cellules en tant que source de puissance électrique en fonction des conditions de fonctionnement présentes de sorte qu'au moins la partie de la pluralité de cellules fournisse une puissance de sortie électrique maximale atteignable dans les conditions de fonctionnement présentes et de manière à être en conformité avec un critère de fonctionnement de cellule prédéfini.

15. Elément de programme pour faire fonctionner un agencement de cellules, lequel élément de programme, lorsqu'il est exécuté par un processeur, est apte à effectuer ou à commander un procédé selon la revendication 14.
